(19) Europäisches Patentamt
European Patent Office
Office européen des brevets

(11) **EP 1 879 012 A1**

(12) **EUROPEAN PATENT APPLICATION**

(43) Date of publication:
**16.01.2008 Bulletin 2008/03**

(51) Int Cl.:
**G01N 1/38** (2006.01)        **G01N 1/40** (2006.01)

(21) Application number: **06270066.1**

(22) Date of filing: **11.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **BAE Systems PLC**
**London SW1Y 5AD (GB)**

(72) Inventor: **Robinson, Robert John**
**Bedmond**
**Hertfordshire WD5 0PQ (GB)**

(74) Representative: **BAE SYSTEMS plc**
**Group IP Department**
**Lancaster House**
**P.O. Box 87**
**Farnborough Aerospace Centre**
**Farnborough, Hampshire GU14 6YU (GB)**

(54) **Détermination of tritium content or concentration**

(57)    The present invention provides a method of determining the tritium content of a porous media comprising the steps of: leaching tritium from the porous media with a leaching agent; and measuring the tritium content of the resultant leachate by scintillation counting.

More particularly, the method comprises the steps of: extracting a sample from the porous media; determining the mass of the sample; immersing the sample in a known quantity of leaching agent for a predetermined time; removing a sample of leachate of known volume; measuring the leachate sample by scintillation counting; calculating the tritium content of the porous media; and calculating the concentration of tritium in the porous media.

Figure 1

**Description**

The present invention relates to a method of determining the tritium content of a porous media and the concentration of tritium in said media.

Tritium is an isotope of hydrogen having the chemical formula $^3H$. Tritium is a pervasive substance and readily permeates into and out of porous media such as brick, concrete and plaster. It is often necessary to determine the quantity of tritium in a porous media for regulatory or safety purposes.

It is known hereto to determine the tritium content of porous media by extracting a sample thereof, crushing the sample, and combusting the crushed sample in an oxygen rich atmosphere in the presence of a catalyst to ensure that all the hydrogen species are converted to water vapour. The tritiated water vapour is trapped in a series of gas bubblers containing dilute acid and then liquid scintillation counting is used to measure the tritium content of the resultant liquid.

One of the problems with this known technique is that there is often a delay between extraction of the sample of porous media from a contaminated site and the work carried out on the sample to determine tritium content, which is usually carried out in an off-site laboratory. The mobile nature of tritium means that tritium readily diffuses out of the sample during this delay and such diffusion causes the resultant determination of tritium content to be inaccurate. A further inaccuracy is introduced by the requirement for handling and transportation of the samples between the site and the laboratory. Samples can be sealed during the delay, but stringent sampling and storage protocols may not always be followed.

A further problem with the known technique is that the laboratory work involved is expensive.

The present invention provides an improved method of determining the tritium content of porous media.

Accordingly, the present invention provides a method of determining the tritium content of porous media, comprising the steps of: leaching tritium from the sample with a leaching agent, and measuring the tritium content of the resultant leachate by scintillation counting.

It has been found that methods embodying the invention reveal accurate results, even though it would have been generally considered that the highly reactive nature of tritium would cause it to bond to the porous media and not be displaced adequately by leaching. The leaching agent is effective in leaching out the tritium to form the leachate and from tests, the accuracy of the method is comparable to that of the prior art method where stringent sampling and storage protocols are followed.

A notable advantage of the methods embodying the invention are that scintillation measurement of the leachate can take place on site without significant delay thereby reducing inaccuracies. Further, the cost associated with the lab work in the prior art method can be reduced.

Preferably, the leaching agent comprises hydrogen with which tritium can substitute. The leaching agent can for example be an aqueous solvent such as water.

More preferably, the sample is immersed in aqueous solvent until the tritium content in the leachate has stabilised and the leachate is then analysed for its tritium content by scintillation counting.

In order that the present invention may be well understood, some embodiments thereof, which are given by way of example only, will now be described with reference to the accompanying drawings, in which:

Figure 1 is a flow diagram showing a method embodying the present invention;

Figure 2 is a graph showing tritium content of a porous media determined by a method embodying the invention against that of the same porous media determined by the prior art method using stringent sample collection and storage protocols;

Figure 3 is a graph showing the diffusion of tritium from a sample stored under three different conditions.

The structural material of buildings is typically porous. Such materials include concrete, brick and plaster. Tritium readily permeates throughout porous material, and it is necessary when decommissioning or dismantling a building or facility where tritium has been used for the porous material to be appropriately disposed. In order to assess the requirement for disposal, it is necessary to determine the tritium content of the various materials of the building. Methods embodying the present invention are suitable for determining tritium content in such building materials and in porous media generally.

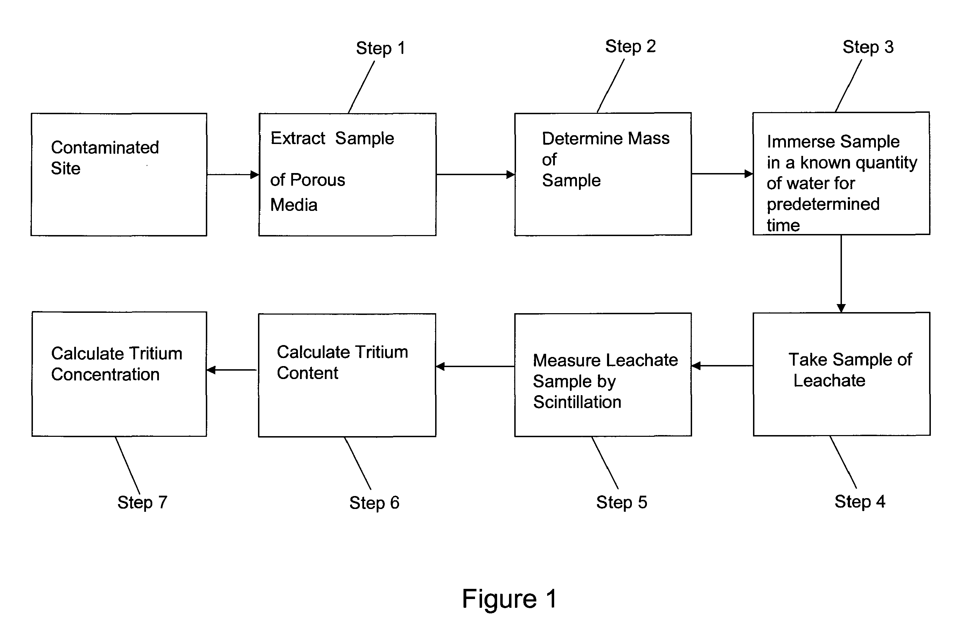

Figure 1 shows a flow diagram of an exemplary method embodying the invention. Step 1 of the method involves the extraction of one or more samples of porous material from the contaminated zone of a building. A sufficient number of samples should be taken from each suspected contaminated porous media to determine reliably the tritium content of the various media present. The samples can be extracted by any convenient method known in the art. Once extracted, the porous media can be crushed but this is not strictly necessary for the current method even though it would be necessary with the method according to the prior art.

Step 2 requires the determination of the mass of each sample. The tritium content of a sample of known mass can be used to predict the tritium content of the whole of the porous media from which the sample is taken, provided that the mass of the whole is known or can be reliably estimated.

In step 3 a vessel containing water or another suitable leaching agent such as alcohol, ethylene glycol or dilute acid, is provided. The leaching agent comprises hydrogen and during the leaching process tritium substitutes for the hydrogen in the leaching agent. The volume of leaching agent present in the vessel is known. It is important to establish the quantity of leaching agent in which the sample is immersed because the quantity of tritium present per unit volume of the resultant leachate is proportional to the quantity of tritium present in the sample. The weighed sample is immediately immersed in leaching agent since the tritium can readily be displaced into the ambient surroundings. The weighed sample is immersed for a predetermined time sufficient to allow the tritium content in the water to stabilise. In practice, given the mobility of tritium, stabilisation occurs relatively quickly. However, the actual time of immersion required can be determined by trial and error.

In step 4, a sample of known volume of the leachate, or tritiated water, is taken from the vessel.

Step 5 involves the measurement of tritium in the leachate by scintillation counting. The use of scintillation fluids for the measurement of the emission of beta particles from chemicals such as tritium is well known and therefore, for brevity, a detailed description of the measurement process will not be provided here. Briefly though, in step 5 beta particles emitted from the sample leachate transfer energy to selected solvent molecules which in turn transfer the energy to fluors. The excited fluor molecules dissipate the energy by emitting light. In this way, beta emission results in a pulse of light. A liquid scintillation counter is used to count the amount of light caused by beta particle emission.

From the results of scintillation, the tritium content of the sample leachate can be calculated in step 6 and therefore, the quantity and concentration of tritium in the porous media can be established in step 7.

An example of the calculations required for steps 1 to 7 is provided below.

STEP 1  Extract Sample of porous Media

STEP 2  Determine mass of Sample 'α' *(grammes)*'

STEP 3  Immerse Sample in measure quantity of leachate 'β' *(cubic centimetres )*

SPEP 4  Take measured quantity of leachate 'ε' *(cubic centimetres)*

STEP 5  Measure tritium content of leachate by scintillation counting 'Ψ' *( Disintegrations per minute)*

STEP 6  Calculate tritium content 'x'

$$\text{'x'} = \beta \times \left( \frac{\psi}{60 \times \varepsilon} \right) \text{ Becquerel}$$

STEP 7  Calculate tritium concentration '$\kappa$'

$$\kappa = \frac{\chi}{\alpha} = \left( \frac{\psi}{60 \times \varepsilon} \right) \times \left( \frac{\beta}{\alpha} \right) \text{ Becquerel per gramme}$$

Tritium has one proton and 2 neutrons in its nucleus $^3_1H$. Tritium decays spontaneously to helium-3 ($^3_2He$), with conversion of a neutron to a proton by the ejection of a beta particle (or high-energy electron) and a neutrino resulting in a helium nucleus with 2 protons and one neutron $^3_2He$.

Tritium generally exists as a gas molecule $^3H_2$ or as tritiated water ($^3H_2O$ or HTO). It does not exists as an atom $^3H_1$ unless the molecule has been excited. Tritium ions never exist in the free state in aqueous solutions but always combine with a water molecule to form an Oxonium ion ($^3H_3O^+$ or $TH_2O^+$). Tritium may also exist as Organically Bound Tritium (OBT) where the tritium may substitute for any hydrogen atom or molecule in an organic compound.

The leaching technique described in relation to Figure 1 is applicable to materials where the tritium exists as tritiated water or oxonium ions which will mix freely with the leachate, without requiring a chemical reaction.

In concrete, for example, initial hydration of cement produces calcium hydroxide $Ca(OH)_2$ and calcium silicate hydrates in the form of gel. For typical water/cement ratios of 0.5, 25% to 30% of the cement remains un-hydrated leading to self-desiccation which dries the capillaries and pores leaving some dry cement that will react only if more water is supplied. If sufficient additional water is absorbed hydration products will fill the capillaries and hydration is effectively halted. The gel (calcium silicate hydrates) is maintained provided $Ca(OH)_2$ is present and acts as a barrier slowing the influx of water and the outflow of $Ca(OH)_2$ from around the nucleating cement particle. Although $Ca(OH)_2$ is soluble in water it cannot be removed from the solid bulk of cement without a flow of water through the capillaries and pores. When these are saturated with static water the solubility product of the hydroxide is reached, producing an equilibrium condition and stopping further dissolution. Under these conditions hydrogen exchange between the static water and the gel is slowed by the diffusion of hydrogen (or tritium), and by the limited solubilities of the cement hydration products involved. Hydrogen (or tritium), initially only present in the pore water or gel could then exchange with other solid phase species in the cement.

Methods embodying the present invention give an accurate measurement of the tritium content of a cement because there is minimal exchange between pore water and gel and the other solid phase species in the cement and that tritium bound in calcium hydroxide and calcium silicate hydrates exchanges with free water during the leaching process.

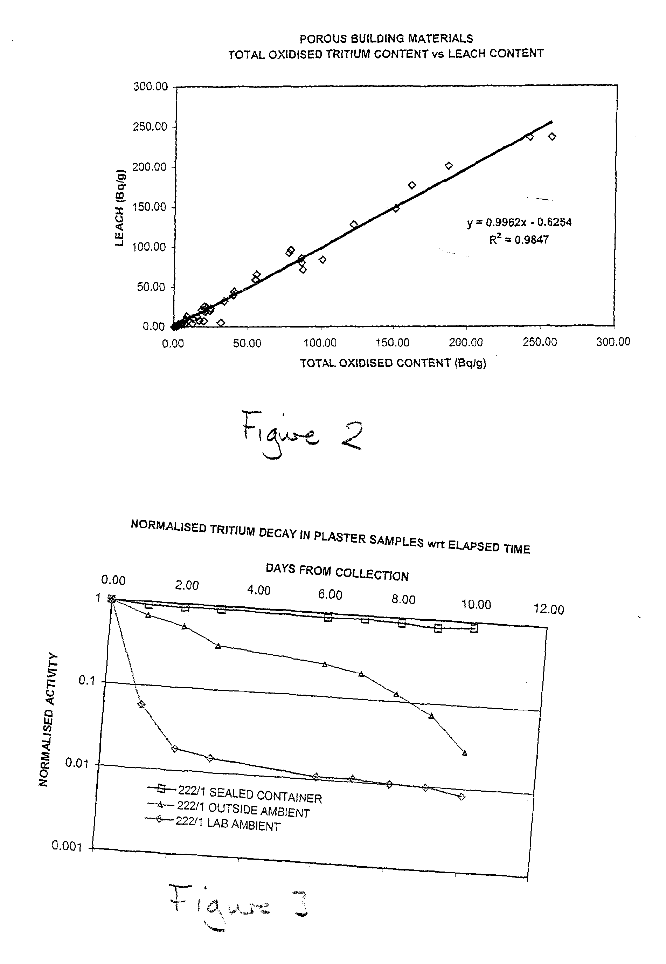

Figure 2 shows a graph which compares the results achieved using a method embodying the present invention with the results achieved using the oxidisation method according to the prior art. Results from the oxidisation method are plotted along the x axis whereas the results by leaching are plotted along the y axis. Linear regression analysis was then performed and as shown:

$$y = 0.9962x - 0.6254$$

$$R^2 = 0.9847$$

Accordingly, the leaching method is calculated to have an almost linear correlation with the oxidisation method. It should be noted that when the oxidisation method was carried out under this comparison test, stringent packaging and storage protocols were adopted to eliminate, to the extent possible, tritium diffusion from the samples prior to oxidation. Therefore, the results obtained from oxidisation are considered to be an accurate test of tritium content in the porous media. It is further noted that given the complexity, propensity for error, and expense of the oxidisation method, the method embodying the present invention provides equally accurate results, is less expensive and less susceptible to error.

As an indication of the potential errors provided by the oxidisation method, Figure 3 shows a graph in which the tritium content of three samples is determined over a prolonged period of time. It will be seen that tritium content of a sample in a sealed container reduces only slightly over the ten day period whereas the tritium content of samples exposed to ambient atmosphere reduce by about two orders of magnitude. The difference in behaviour of the tritium in the sample exposed to an outside ambient atmosphere and that of the sample exposed to a laboratory ambient atmosphere can be explained by an understanding that laboratory ambient atmosphere is relatively drier than outside ambient atmosphere and therefore there is a steeper gradient between the density of tritiated water inside the sample and water vapour in laboratory ambient atmosphere. It should also be noted that tritium content reduces by a factor of over ten in one day in the laboratory ambient atmosphere.

## Claims

1. A method of determining the tritium content of a porous media comprising the steps of: leaching tritium from the porous media with a leaching agent; and measuring the tritium content of the resultant leachate by scintillation counting.

2. A method as claimed in claim 1, wherein the leaching agent comprises hydrogen with which tritium can substitute.

3. A method as claimed in claim 2, wherein the leaching agent is an aqueous solvent.

**4.** A method as claimed in claim 2 or 3, wherein the leaching agent is water.

**5.** A method as claimed in any preceding claim, wherein the tritium is leached from the porous media by immersion of the porous media in the leaching agent until the tritium content of the leachate has stabilised.

**6.** A method of determining the tritium content of a porous media comprising the steps of:

(i) extracting a sample from the porous media;
(ii) determining the mass of the sample;
(iii) immersing the sample in a known quantity of leaching agent for a predetermined time;
(iv) removing a sample of leachate of known volume;
(v) measuring the leachate sample by scintillation counting;
(vi) calculating the tritium content of the porous media; and
(vii) calculating the concentration of tritium in the porous media.

Figure 1

Step 1 — Extract Sample of Porous Media

Step 2 — Determine Mass of Sample

Step 3 — Immerse Sample in a known quantity of water for predetermined time

Step 4 — Take Sample of Leachate

Step 5 — Measure Leachate Sample by Scintillation

Step 6 — Calculate Tritium Content

Step 7 — Calculate Tritium Concentration

Contaminated Site

PROUS BUILDING MATERIALS
TOTAL OXIDISED TRITIUM CONTENT vs LEACH CONTENT

$y = 0.9962x - 0.6254$
$R^2 = 0.9847$

Figure 2

NORMALISED TRITIUM DECAY IN PLASTER SAMPLES wrt ELAPSED TIME

Figure 3

**European Patent Office**

**EUROPEAN SEARCH REPORT**

Application Number

EP 06 27 0066

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HIDEO MATSUZURU, NOBORU MORIYAMA AND AKIHIKO ITO: "leaching behaviour of tritium from a hardened cement paste" ANNALS OF NUCLEAR ENERGY, vol. 6, 1979, pages 417-423, XP008074435 great britain * the whole document * | 1-6 | INV. G01N1/38 G01N1/40 |
| X | LOGSDOM, KELLER, MOORMAN: "measured and predicted leaching from multiple undisturbed soil columns" SOIL SCIE. SOC. AMERICAN JOURNAL, 2002, pages 686-695, XP008074438 * the whole document * | 1,6 | |
| X | NICOLETA DENEANU, MIRELA DULAMA, ELENA BABOESCU: "the influence of additives on leaching of tritium of the immobilization of contaminated oils in cementation" NUCLEAR ENERGY IN CENTRAL EUROPE, 2000, pages 1-8, XP008074449 slovenia * pages 3-4 * | 1,6 | |
| A | ROULIER ET AL: "Controls on atrazine leaching through a soil-unsaturated fractured limestone sequence at Brevilles, France" 1 March 2006 (2006-03-01), CONTAMINANT HYDROLOGY, ELSEVIER, AMSTERDAM, NL, PAGE(S) 81-105 , XP005285614 ISSN: 0169-7722 * page 84 - page 85 * | 1,6 | |

TECHNICAL FIELDS SEARCHED (IPC)

G01N
G21F

-/--

The present search report has been drawn up for all claims

| Place of search | Date of completion of the search | Examiner |
|---|---|---|
| The Hague | 1 February 2007 | Cantalapiedra, Igor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

**EUROPEAN SEARCH REPORT**

Application Number

EP 06 27 0066

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DWORSCHAK H ET AL: "Waste management strategies for fusion materials" FUSION ENGINEERING AND DESIGN, ELSEVIER SCIENCE PUBLISHERS, AMSTERDAM, NL, vol. 29, 3 March 1995 (1995-03-03), pages 176-180, XP004202780 ISSN: 0920-3796 * the whole document * | 1 | |
| A | DE 42 10 832 C1 (SIEMENS AG, 8000 MUENCHEN, DE) 22 July 1993 (1993-07-22) * column 2, line 54 - column 3, line 21; figure 1 * | 1-6 | |
| A | US 4 020 003 A (STEINBERG MEYER ET AL) 26 April 1977 (1977-04-26) * column 1, line 62 - column 2, line 68 * | 1,6 | |

TECHNICAL FIELDS SEARCHED (IPC)

The present search report has been drawn up for all claims

| Place of search | Date of completion of the search | Examiner |
|---|---|---|
| The Hague | 1 February 2007 | Cantalapiedra, Igor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 06 27 0066

This annex lists the patent family members relating to the patent documents cited in  the above-mentioned European search report.
The members are as contained in the European Patent Office EDP file on
The European Patent Office is in no way liable for these particulars which are merely given for the purpose of information.

01-02-2007

| Patent document cited in search report | Publication date | Patent family member(s) | Publication date |
|---|---|---|---|
| DE 4210832 C1 | 22-07-1993 | NONE | |
| US 4020003 A | 26-04-1977 | NONE | |

EPO FORM P0459

For more details about this annex : see Official Journal of the European Patent Office, No. 12/82